# EUROPEAN PATENT APPLICATION

(11) **EP 4 742 135 A1**
(43) Date of publication of application: **13.05.2026**
(21) Application number: 24839576.6
(22) Date of filing: 01.07.2024
(51) Int. Cl.: G06Q 30/06

(54) **TRANSACTION SYSTEM**

(30) Priority: 12.07.2023 JP 2023114703
(71) Applicant: Plat'Home Co., Ltd., Tokyo 102-0073 (JP)
(72) Inventor: SUZUKI Tomoyasu, Tokyo 102-0073 (JP); OGAWA Daisuke, Tokyo 102-0073 (JP); GOTO Toshiya, Tokyo 102-0073 (JP)
(74) Representative: Ström & Gulliksson AB
(86) International application number: PCT/JP2024/023808
(87) International publication number: WO 2025/013684

(57) **Abstract**

The purpose of the present invention is to provide a transaction system that is capable of using Internet of Things (IoT) technology to construct a transaction system related to general goods. The present invention provides a transaction system comprising: a data transaction unit that uses a blockchain to maintain and manage a transaction contract for a good and that executes the transaction contract for the good; a good owner account that owns the good; an issuer account that issues a good token to the good which is owned by the good owner; and one or more stakeholder accounts that carry out a transaction of the good, wherein the data transaction unit uses the good token to execute the transaction contract between the stakeholder accounts in order to carry out a transaction of the good, and the good token is a semi-fungible token.

## Description

### TECHNICAL FIELD

The present invention relates to a transaction system for carrying out transactions of things. In particular, the present invention relates to a transaction system capable of handling things not directly pertinent to IoT devices while using IoT technology.

### BACKGROUND ART

In recent years, the Internet of Things (IoT) has been widely utilized. Data obtained by sensors, etc. on the IoT is utilized for various purposes. A device that provides IoT data is called an IoT device. Moreover, transactions of data generated by this IoT device have also been carried out actively.

For example, Patent Document 1 below discloses a system of connecting IoT devices by LPWAN to trade points. Moreover, Patent Document 2 below discloses a method for enabling financial transactions to be carried out utilizing IoT devices.

### Citation List

### Patent Documents

Patent Document 1: Japanese Unexamined Patent Application (Translation of PCT Application), Publication No. 2021-519471
Patent Document 2: Japanese Unexamined Patent Application, Publication No. 2022-109163

### DISCLOSURE OF THE INVENTION

### Problems to be Solved by the Invention

As described, it has been widely proposed to trade intangible things such as points and financial assets utilizing IoT technology. However, in a case of constructing an industrial system generally concerning things in the world, things and human beings not directly pertinent to IoT devices need to be involved in many cases. Even in a case in which the things are furnished with IoT devices, unrelated participants and ordinary persons may participate in transactions, and such ordinary persons will increase with the growth of the market. Moreover, things (devices or simple commodities) originally not pertinent to IoT will also increase with the growth of the market. In other words, most of the things in the world are devices (mere things (commodities)) not pertinent to IoT. If such a situation cannot be dealt with, it is difficult to apply IoT technology to a transaction system for things. In order to deal with such a problem, the inventors of the present application consider that the following ingenuities are required.
(1) A currency relationship (interested parties, in particular, investors, recipients, and intermediate participants) related to things as described above needs to be handled.
(2) There are an enormous number of things in the real world (too enormous to compare with the number of IoT devices), and it is necessary to achieve the ability to handle things exceeding the scale of several trillions.
(3) There are various interested parties (e.g., belonging to a wide variety of jurisdictions, etc.) in an industrial system (a transaction system), and a method for handling them without contradiction is required.

In view of such circumstances, the present invention has an object to provide a transaction system that concerns common things and that can be constructed using IoT technology. Means for Solving the Problems

### (Basic Principles)

In order to solve the above-described problems, the present invention more specifically employs means for issuing a token called a "things token" having written therein information for handling a currency relationship pertinent to a thing. This enables a huge number of things and users to be dealt with without separately referring to currency rules, as the currency relationship is originally written in things. As a result, it is possible to adapt blockchain economics including things to the real world without difficulty.

### (Comparison with Conventional Blockchain)

A transaction management system achieved by a conventional blockchain and a structure of the present invention will be compared.

### (Conventional System)

Conventionally, a "things token" and a "currency token and security token" have been prescribed as separate tokens. As a result, information concerning things and information concerning currencies are managed and executed as separate databases.

### (System of the Present Invention)

The present invention uses "a security-functionality-incorporated token" as the "things token". As a result, a relationship of a participant with a thing can be executed by the token and a smart contract.

### (Example of Implementation Method)

A security functionality can be incorporated into a things token utilizing ERC-3525 (a semi-fungible token), or a smart contract can be separately implemented as a things protocol to provide the things token with both of non-fungibility as a thing and security fungibility. Then, by allowing various stakeholders to participate in the things protocol, various contractual relationships between things and participants and scalability can be achieved at the same time.

### ERC-3525

ERC-3525 is one of token standards of Ethereum, and is often called a semi-fungible token (SFT), which is a kind of important token along with non-fungible tokens (NFTs) (ERC-721), fungible tokens (FTs) ERC-20, etc. ERC-3525 (SFT) can also be utilized as a currency like an FT and can also be provided with a unique ID indicating distinguishability like an NFT. ERC-3525 can deal with a plurality of tokens in one smart contract. Moreover, ERC-3525 has characteristics that can facilitate division and integration of tokens and is supposed to be suitable for the financial field, for example. ERC-3525 will be mainly described in the present embodiment, but a semi-fungible token (SFT) having similar characteristics may be utilized. Furthermore, a system in which Ethereum is used will be mainly described in the present patent, but any system that enables similar transactions may be used. It should be noted that "ETHEREUM" is a registered trademark.

### (Principle Diagram)

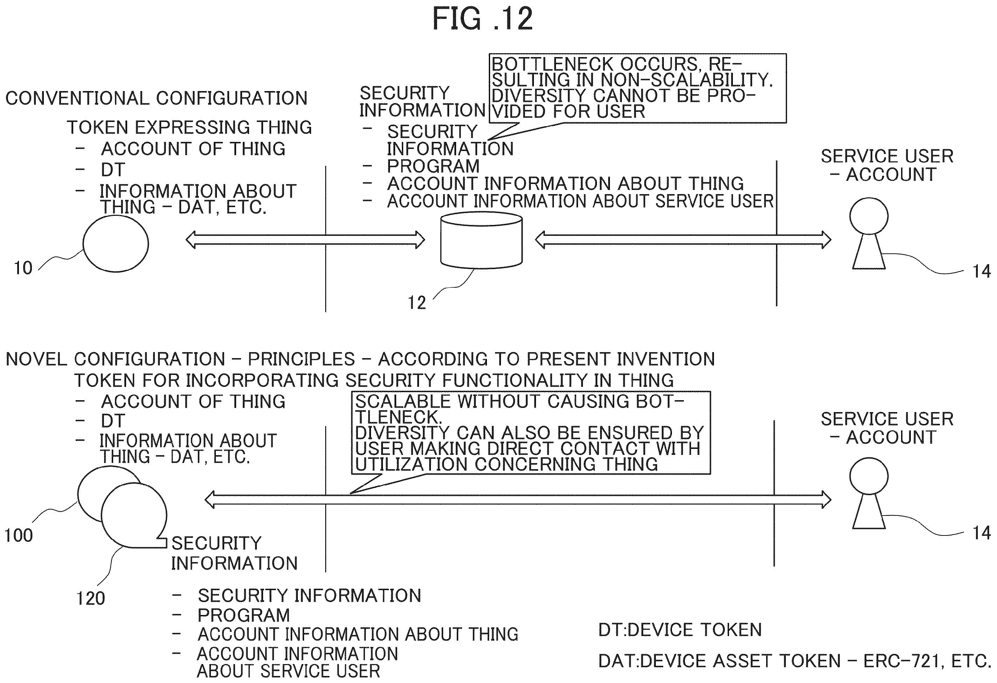

A principle diagram of the present invention is illustrated in FIG. 12. As illustrated in this diagram, a token 10 expressing a thing, security information 12, and a service user 14 are separately configured in a transaction system that utilizes a blockchain, such as the conventional Ethereum. Herein, the token 10 expressing a thing includes an account of the thing, DT, and information about the thing. DT is a device token, and the information about the thing is, for example, a device asset token (DAT), etc. Moreover, it is preferable that the security information 12 includes a program, account information about the thing, account information about the service user, etc., in addition to the security information itself. Furthermore, the service user 14 has an account of the user. Under such a configuration, a case is also assumed in which a bottleneck occurs in processing of the security information 12, resulting in non-scalability. It is also considered difficult to provide diversity for the user 14.

In contrast, the transaction system (FIG. 12) of the present invention is composed of a things token 100 for incorporating a security functionality into a thing and the service user 14. Herein, the token 100 expressing a thing includes an account of the thing, DT, and information about the thing. DT is a device token, and the information about the thing is, for example, a device asset token (DAT), etc. Furthermore, the things token 100 has added thereto security information 120 as illustrated in FIG. 12, as the security functionality is incorporated. It is preferable that the security information 120 includes a program, account information about the thing, account information about the service user, etc., in addition to the security information itself, similarly to the security information 12 in the conventional configuration. Such a mechanism achieves scalability without causing a bottleneck. Furthermore, diversity can also be ensured by the user 14 making a direct contact with utilization concerning the thing.

### (Advantages Offered by the Present Invention)

1. A huge number of things and users can be dealt with. As described in FIG. 12 above, the conventional technology requires a database for handling security information, which requires management of the thing-participant relationship to be separately carried out, whereas the present invention eliminates the need for the management. As a result, an increasing number of things and users can be dealt with.
2. Diversity in things and participants can be achieved. As described above, the principles of the present invention eliminate the need to manage the thing-participant relationship. As a result, diversity in things and participants can be ensured.
3. Participants can participate asynchronously. As described above, the principles of the present invention eliminate the need to manage the thing-participant relationship. As a result, participants can participate asynchronously at their own convenience.

### (Description of FT and NFT)

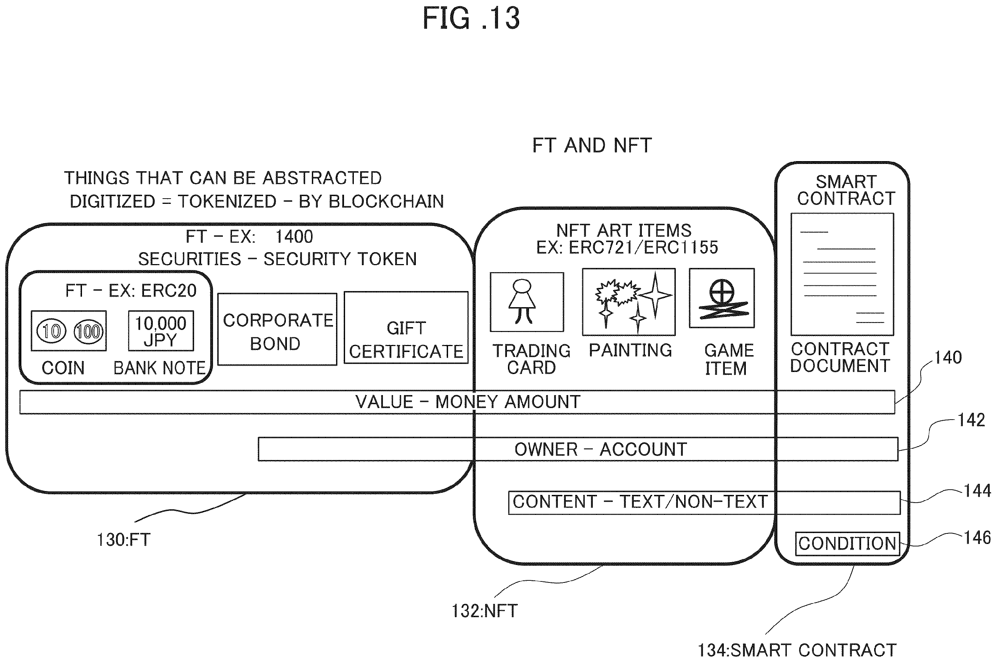

A conceptual diagram of a fungible token (FT) (e.g., ERC-20) and a non-fungible token (NFT) (e.g., ERC-721) is illustrated in FIG. 13. A fungible token (FT) 130 is mainly used as a currency on a transaction system. An example thereof is ERC-20, etc. A non-fungible token (NFT) 132 is mainly utilized as an NFT item. An example thereof is ERC-721, etc. As illustrated in FIG. 13, the FT 130 is such that ERC-20, for example, is utilized as a coin or bank note and that ERC 1400 is utilized as securities (e.g., a corporate bond or gift certificate), etc. The FT thus has a characteristic as a value (money amount) 140.

As illustrated in FIG. 13, the NFT 132 is such that ERC-721, ERC-1155, etc., for example, are utilized as NFT art items. The NFT 132 thus also includes data about an owner (account) 142 in addition to the characteristic as the value (money amount) 140. Furthermore, the NFT 132 also includes content 144 as an art item, etc. This content 144 may be text data or may be non-text data. FTs and NFTs are associated with each other by a smart contract 134. The smart contract 134 prescribes a condition 146 which is content of the contract.

### (Specific Configuration)

More specifically, the present invention employs a configuration as will be described below.

A transaction system (e.g., a system including a PTPF 200 which will be described later and IS 240, TO 242, SH 500, etc. which are accounts on the PTPF 200) according to the present invention includes a data transactor (e.g., the PTPF 200 which will be described later) that maintains and manages a transaction contract for a thing utilizing a blockchain and executes the transaction contract for the thing, an account of a things owner (e.g., the TO 242 which will be described later) that owns the thing, an issuer account (e.g., IS 240 which will be described later) that issues a things token (e.g., the things token 100 which will be described later) to the thing owned by the things owner, and one or two or more stakeholder accounts (e.g., the SH 500 which will be described later) that carry out a transaction of the thing, in which the data transactor executes the transaction contract between the one or two or more stakeholder accounts using the things token for carrying out the transaction of the thing, and the things token is a semi-fungible token.

The things token may be a token having security fungibility and non-fungibility as a thing.

The things token may be a token having an account of the thing, a device token, a device asset token, and security information.

The data transactor may include a brand account (e.g., B 238 which will be described later) that carries out a transaction of a thing of a predetermined type, and the brand account and the issuer account may make a contract, and based on the contract, the issuer account may supply the brand account with the things token having been issued.

The brand account includes one or more brand accounts, and the transaction system may further include a brand DAO (e.g., a brand DAO which will be described later) which is a rule interface that defines a rule between the one or more brand accounts and another account, in which the brand may make the contract with the issuer account in accordance with the rule defined by the brand DAO.

### Effects of the Invention

According to the present invention, a transaction system that concerns common things and that can be constructed using IoT technology can be provided.

### BRIEF DESCRIPTION OF THE DRAWINGS

FIG. 1 is a conceptual diagram of PTPF which is a data transaction platform employed in a transaction system of the present embodiment;
FIG. 2 is a conceptual diagram of PTPF of the present embodiment;
FIG. 3 is a conceptual diagram of PTPF of the present embodiment;
FIG. 4 is an explanatory diagram of a things protocol;
FIG. 5 is a conceptual diagram of a things owner;
FIG. 6 is a conceptual diagram for describing roles of AC/DB and IS in the present embodiment;
FIG. 7 is an explanatory diagram of a brand DAO in the present embodiment;
FIG. 8 is an explanatory diagram illustrating a facet of things (approval) that can be referred to by brand DAOs: brands;
FIG. 9 is an explanatory diagram of an architecture that divides a brand interface X and a things interface Y;
FIG. 10 is a conceptual diagram illustrating a relationship between a things DAO and stakeholders;
FIG. 11 is an explanatory diagram illustrating an implementation example of the transaction system according to the present embodiment;
FIG. 12 is a conceptual configuration diagram of a conventional transaction system and the transaction system of the present patent; and
FIG. 13 is an explanatory diagram of an FT and an NFT.

### PREFERRED MODE FOR CARRYING OUT THE INVENTION

Hereinafter, an embodiment of the present invention will be described based on the drawings.

### 1. Outline of Payload Transaction Platform (PTPF)

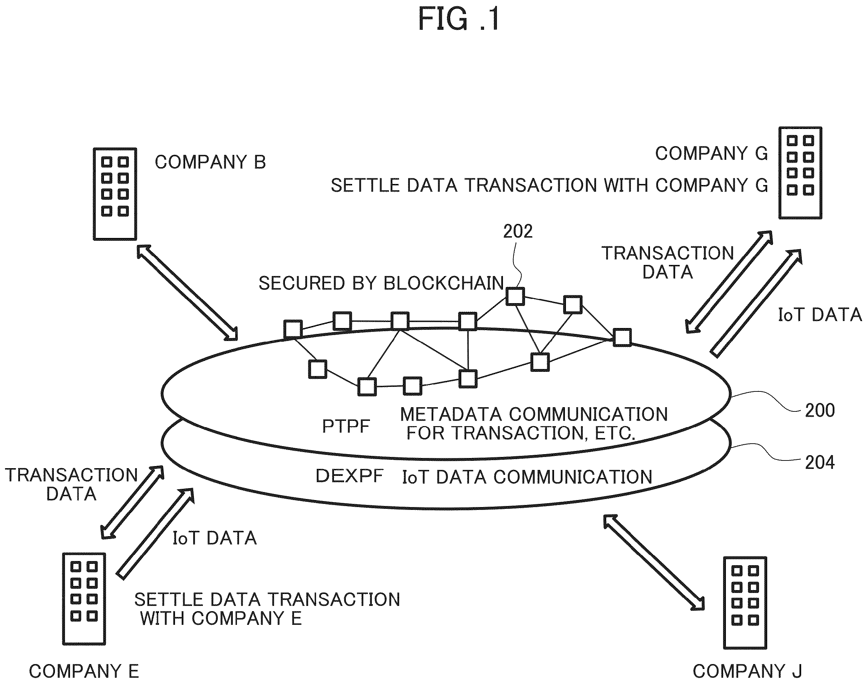

As mentioned above, the present embodiment proposes a transaction system that enables efficient transactions of things and employs, as its platform, a payload transaction platform (PTPF) developed by the inventors of the present application. First, this PTPF will be briefly described. A conceptual diagram of a PTPF 200 is illustrated in FIG. 1. The PTPF 200 is a data transaction platform that, utilizing a blockchain 202, achieves information distribution with a large volume, wide variety of IoT data provided with transaction information. The PTPF 200 is based on cooperation with a DEXPF 204 developed likewise by the inventors of the present application. The DEXPF 204 is a data transmission platform. The PTPF 200 is responsible for so-called a transaction contract, and the DEXPF 204 is responsible for actual data transmission. However, the DEXPF 204 is not directly pertinent to the present patent application, and description thereof will thus be omitted. As illustrated in FIG. 1, if a transaction is settled between Companies G and E, the PTPF 200 exchanges transaction data between Companies G and E, and DEXPF transmits/receives IoT data targeted for transaction based on their contract.

This mechanism achieves an IoT data transaction platform in which IoT data to be transmitted is securely provided with various types of transaction information such as property rights by a blockchain technology to enable control over a data destination, etc. This promotes distribution of IoT data, which enables cooperation between data and physical things. The PTPF 200 is a protocol that utilizes a blockchain. The use of the PTPF 200 can achieve IoT data transmission in which differences in procedure among services and platforms among respective businesses, such as differences in IoT devices and their manufacturer protocols, which have been a problem in the conventional IoT system, are absorbed. The PTPF 200 adds various types of transaction information such as property rights, use rights, and prices to the IoT data to be transmitted to enable control over a data destination, etc., so that cooperation between data and physical things is achieved.

### (2) Application in the Present Embodiment

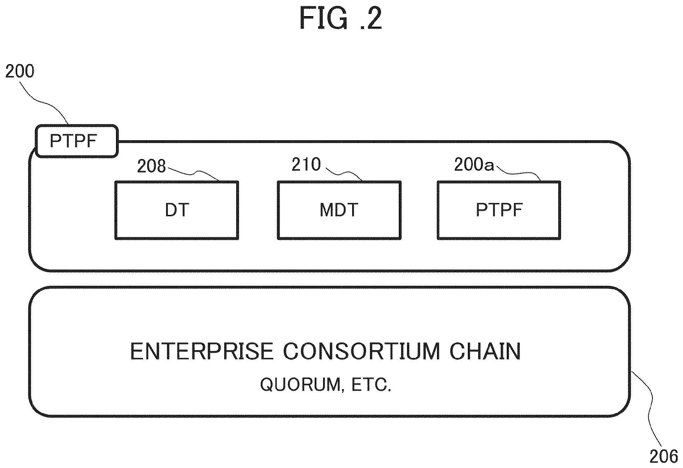

The transaction system of the present embodiment utilizes the PTPF 200 as a data transaction platform, and an explanatory diagram of an NFT that can be deployed therein and related software is illustrated in FIG. 2. As illustrated in FIG. 2, the PTPF 200 is located on a platform blockchain 206 and includes a DT 208, an MDT 210, etc., in addition to a PTPF protocol 200a. The device token (DT) 208 represents a device. An example thereof may be an extended token of ERC-721 (NFT). The meta data token (MDT) 210 represents information about data for transaction. An example thereof may be an extended token of ERC-721 (NFT). The PTPF protocol 200a is a protocol for smart contracts and carries out retention of data transaction information, settlement, etc.

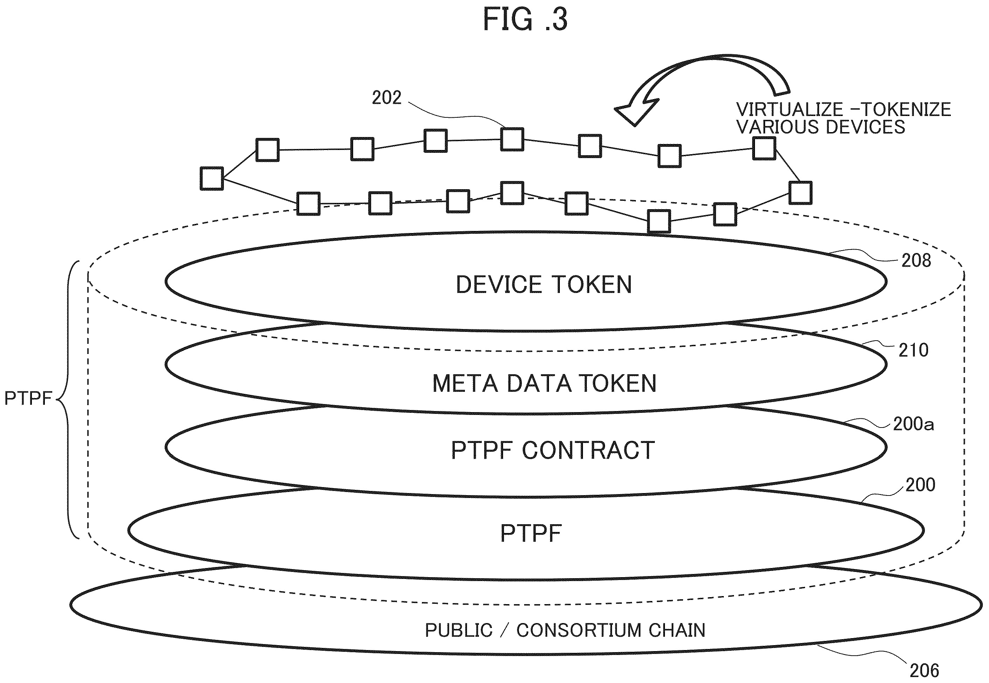

A more detailed software configuration diagram is illustrated in FIG. 3. The PTPF 200, the PTPF protocol 200a, the MDT 210, and DT 208 are provided on the platform blockchain 206. Various devices are virtualized (tokenized) and depicted on the blockchain 202.

### 2. PTPF in the Present Embodiment

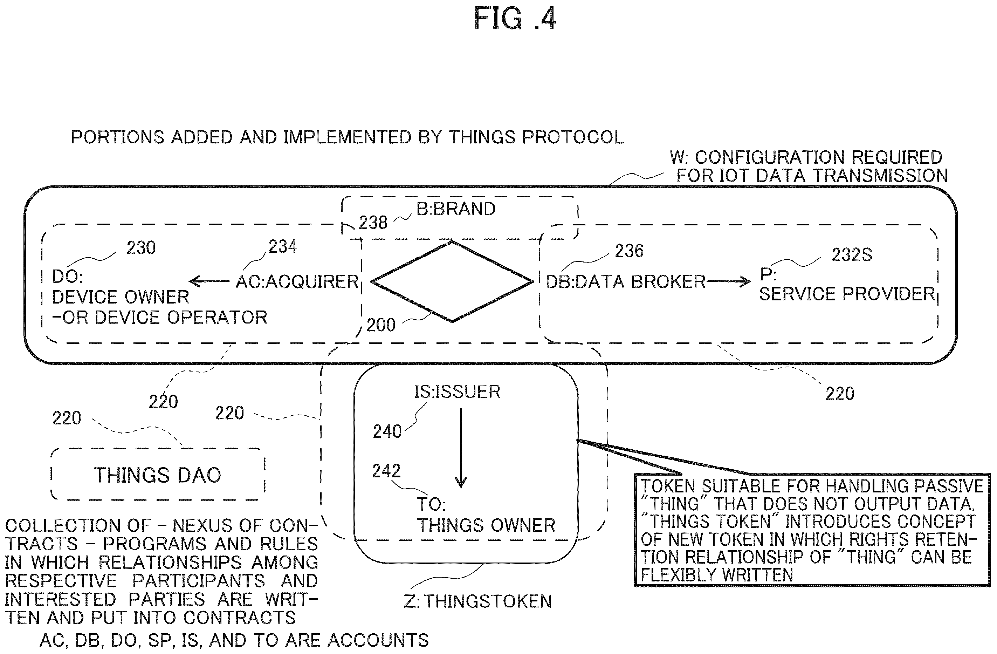

The PTPF 200 of the present embodiment is characterized by utilization of a things protocol. This facet is illustrated in an explanatory diagram of FIG. 4.
(i) An acquirer (AC) 234 presents a selling offer to the PTPF 200 for a device owner (DO) 230.
(ii) A data broker (DB) 236 presents a buying offer to the PTPF 200 for a service provider (SP) 232 that utilizes data.
(iii) The PTPF 200 establishes a match and forms and manages a contract.
(iv) A brand (B) 238 is an organization that carries out a transaction on the transaction system provided by the PTPF 200. In the present embodiment, a brewers association, etc. that sells liquor (things) particularly corresponds to the B 238.
(v) The present embodiment is characterized in that an issuer (IS) 240 issues the things token 100 to the things owner (TO) 242. The TO 242 is an individual liquor bottle, for example. Accordingly, the TO 242 can execute a transaction contract concerning selling of things on the PTPF 200, utilizing the things token 100.

This things token 100 is a token having a very preferable character for handling a passive "thing" that does not output data. The present embodiment is thus characterized by introduction of a concept of a new token in which a rights retention relationship of the thing can be flexibly written. (vi) Moreover, the present embodiment sets a things DAO 220. This things DAO 220 is a decentralized autonomous organization for transactions of things. Liquor wholesalers and individual liquor shops can smoothly carry out transactions of things (liquor) by participating in this things DAO 220. In FIG. 4, the things DAO 220 is indicated by broken lines. In other words, portions enclosed by the broken lines in FIG. 4 constitute the things DAO 220. Furthermore, in FIG. 4, W represents a configuration necessary for IoT data transmission, and Z represents a novel configuration for utilizing the things token 100. It should be noted that the AC 234, the DB 236, the DO 230, the SP 232, the IS 240, the TO 242, and the B 238 are all accounts in the PTPF 200.

### (1) (Overall) Token Types in Things Protocol

Tokens to be used in the transaction system that utilizes a blockchain in the present embodiment will be described.
(a) Sensing Device
   - A device asset token (DAT) such as ERC-721, for example The device token (DT) 208 represents a device as mentioned above. An example thereof may be an extended token of ERC-721 (NFT). The meta data token (MDT) 210 represents information about data for transaction as mentioned above. An example thereof may be an extended token of ERC-721 (NFT).
(b) Things
   - TT ERC-3525 (things token): the present embodiment is characterized by utilization of the things token which is a token for an individual thing. ERC-3525 (SFT), etc. can be utilized as this things token. The things token may also be referred to as TT.
(c) Value
   - TCX: in the present embodiment, this TCX is used as a thing that plays a role of a value, i.e., a currency. In other words, TCX is a utility token in the things protocol. For example, ERC-20, etc. can be utilized.
(d) Organization
   - Things DAO: the things DAO 220 is, as described above, a framework of a contract or smart contract. In the present embodiment, transactions of things can be executed basically by participating in the things DAO 220. The things DAO 220 refers to a collection of (nexus of contracts) programs and rules in which relationships among respective participants and interested parties are written and put into contracts.

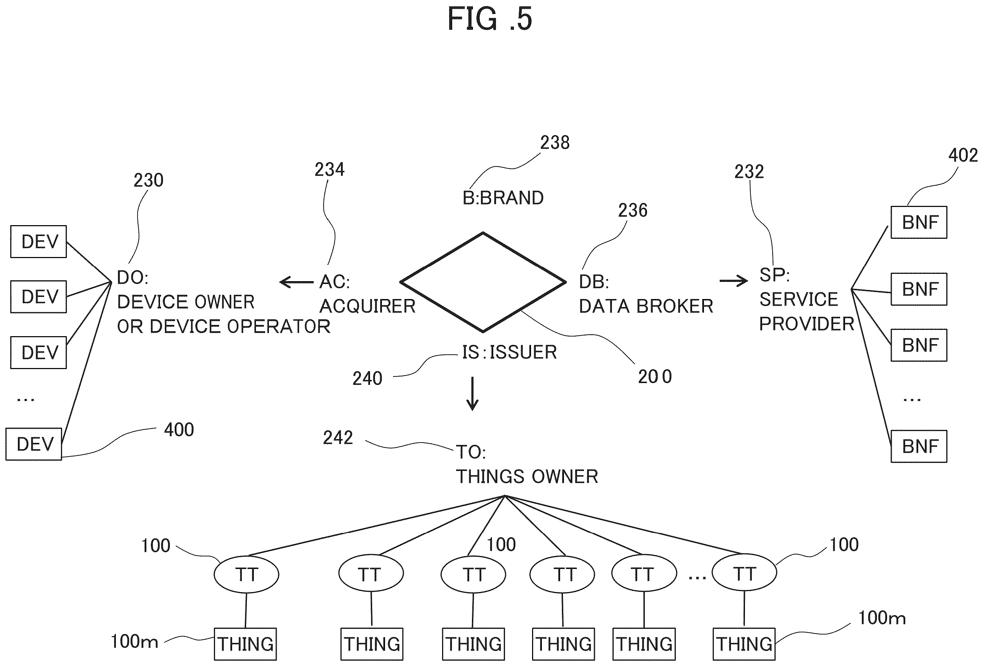

FIG. 5 illustrates a detailed conceptual diagram of the things owner (TO) 242, etc. As illustrated in this diagram, the TO 242 manages a plurality of TTs (things tokens) 100 issued to things 100m managed by itself. It should be noted that the DO 230 similarly manages a plurality of devices (Devs) 400. The SP 232 offers a profit to Bnf 402. Bnf represents a beneficiary and may also be expressed as a "recipient". The B 238, the IS 240, the AC 234, the DB 236, etc., other than them are configured similarly to those in other drawings such as FIG. 4.

### (2) Roles of AC/DB and IS

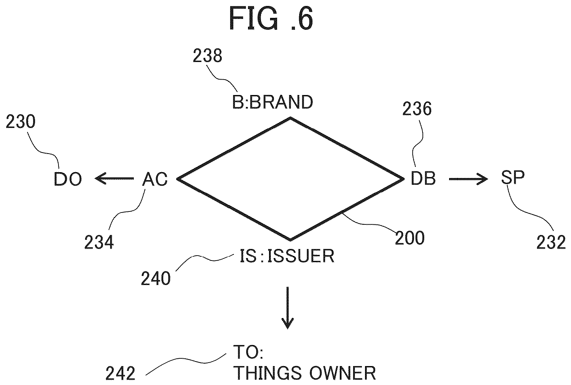

FIG. 6 illustrates a conceptual diagram for describing roles of AC/DB and IS in the present embodiment. The AC 234 approves an account of DO and
issues the DT 208 and the MDT 210. The DB 236 approves an account of the SP 232. The IS 240 approves an account of the things owner (TO) 242
and issues TT (things token). This TT is the things token described so far. In the present embodiment, an individual thing can be efficiently handled by issuance of TT. It should be noted that the IS 240 represents an issuer as illustrated in FIG. 6. This means that TT (things token) is issued to the things owner (TO).

### (3) Brand Administration: Contractual Relationship concerning B (Brand DAO)

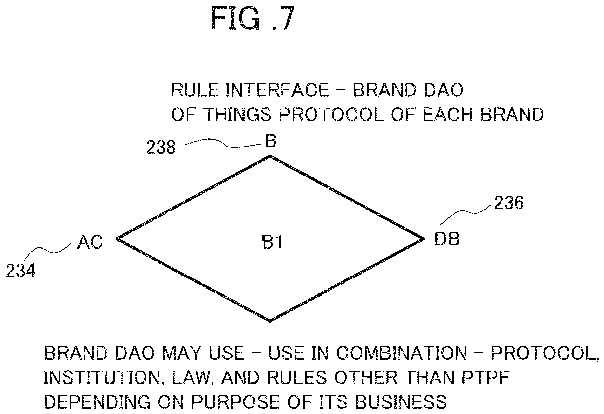

FIG. 7 illustrates a conceptual diagram for describing a brand DAO in the present embodiment. It should be noted that DAO represents a decentralized autonomous organization. The brand DAO in the present embodiment is a constituent unit in actual operation of the things protocol,
i.e., a contractual unit. In the present embodiment, this brand DAO is written using the framework of the things DAO 220. A rule interface of the things protocol for each brand is the brand DAO. As illustrated in FIG. 7, the B 238 is a rule setter.

The AC 234 and the DB 236 are participants that execute activities as agents for the B 238 to the DO 230 and the SP 232. The DO 230 and the SP 232 are participants that actually deliver data and provide services under the rules of the B 238. The brand DAO is a decentralized autonomous organization for a predetermined brand and may use (use in combination) a 238 protocol, an institution, a law, and rules other than the PTPF 200 depending on the purpose of its business.

For example, in order to carry out transactions concerning liquor, it is also suitable to cause a liquor merchants cooperative association (voluntary association) to function as the initial B 238 to constitute the brand DAO. It is also suitable to carry out addition of a constituent member, etc. at a later date according to necessity. As to such a brand DAO, it is assumed that various types of brand DAOs are made according to the type of business. A clothing DAO, a food DAO, etc. may be constructed on the transaction system according to the present embodiment. It should be noted that the brand DAO may be commonly composed of a plurality of participants, but may be composed of one company. It is also possible to compose a one-company DAO as long as an ecosystem can be operated by one company.

### (4) Approval of Things that can be referred to by Brand DAO: Brand

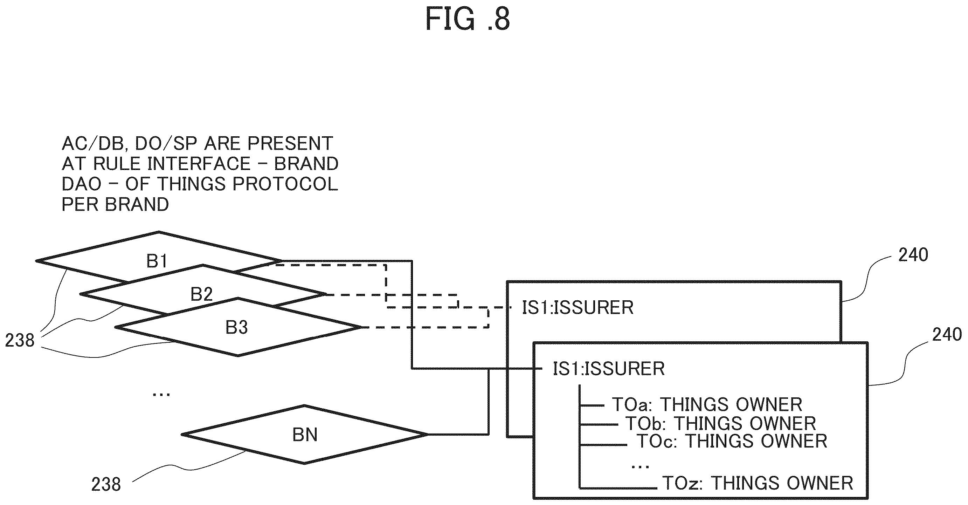

In the brand DAO, the B 238 may set various rules. More specifically, examples thereof include approval of things that can be referred to. An explanatory diagram illustrating this facet is illustrated in FIG. 8. As illustrated in FIG. 8, the AC 234/the DB 236, the DO 230/the SP 232 are each present at a rule interface (brand DAO) in the things protocol per brand 238. As illustrated in FIG. 8, a plurality of Bs 238 may be present. In FIG. 8, B1, B2, B3, ..., Bn are depicted. A behavior in this FIG. 8 will be described below.
(a) Each B 238 can utilize things from each brand DAO by making a contract with the issuer (IS) 240.
(b) Each B 238 enables participation in the ecosystem of each B 238 using things of the TO 242 which is a subordinate of the IS 240 by making a contract with the IS 240. This can achieve provision of a value related to things for a participant in the B 238.
(c) A created value consideration is distributed to each stakeholder. For example, a part of the value consideration can be distributed to the TO 242, and another part of the value consideration can be distributed to the IS 240. In other words, it can also be configured such that the IS 240 can also receive a distribution revenue. Distribution to each stakeholder may be carried out freely, and a ratio thereof may be fixed freely. Moreover, the IS 240 may participate in a plurality of brand DAOs. In the example of FIG. 8, a facet is depicted in which an IS1-240 participates in B1-238, B2-238, and B3-238 and in which ISn participates in B1-238 and Bn-238. For example, in order to carry out a transaction concerning liquor, a corporation serving as an organizer initially can be the IS 240 to certify each brewer as the TO 242. It is considered that this IS 240 then issues TT (things token) of each brewery to each liquor bottle handled by each brewer.

### (5) Utilization of TT (things token) from B

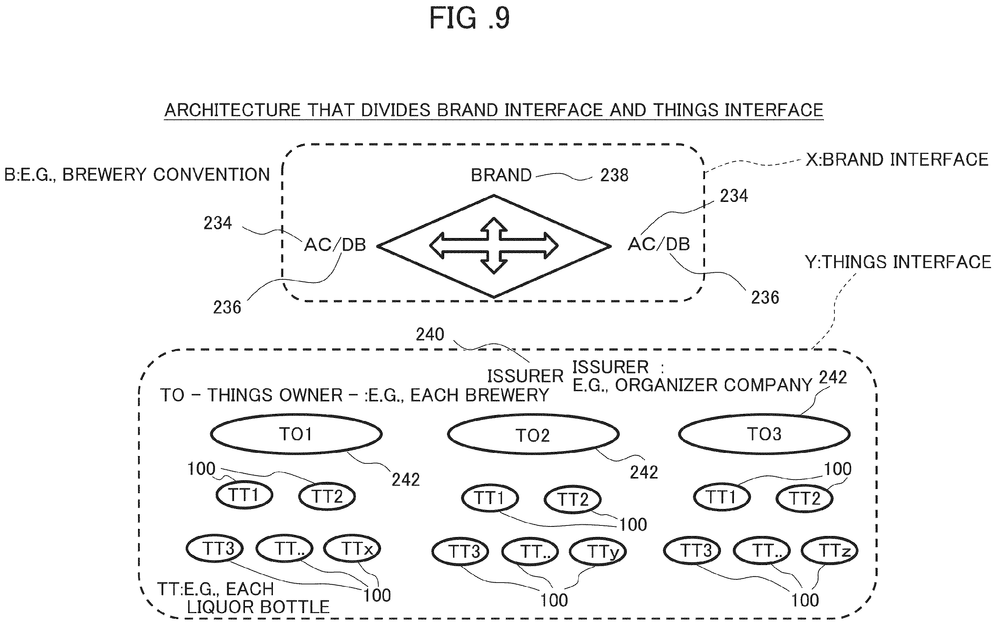

The present embodiment is characterized by employment of SFT (e.g., ERC-3525) as a token to achieve a transaction system suitable for carrying out transactions of things. This things token (also called TT) 100 is issued to each TO 242 by the IS 240. The B 238 (e.g., a brewery convention) coordinates contracts with the AC 234, the DB 236, etc. via the PTPF 200. On the other hand, the IS 240 issues the things token 100 to the TO 242. On this occasion, the things token 100 is issued to each thing handled by each TO 242 (FIG. 9). FIG. 9 is an explanatory diagram concerning utilization of TT 100 from the B 238 as described. As illustrated in this FIG. 9, the present embodiment employs an architecture that divides a brand interface X and a things interface Y. FIG. 9 is thus also a conceptual diagram of the architecture in which the brand interface X and the things interface Y are used. It should be noted that the interface means a domain.

In the present embodiment, the issuer (IS) 240 issues the TT (things token) 100 under such an architecture as described above. A condition between the TO 242 and the B 238 determines which TT 100 is caused to participate in which B 238. When the condition is settled, the IS 240 permits connection of the TT 100 to the brand interface X of the B 238. Such a mechanism enables utilization of the TT (things token) 100 from the B 238. In addition, as illustrated in FIG. 9, the IS 240 can manage a plurality of TOs 242. Moreover, the TT (things token) 100 issued by the IS 240 can be issued to each liquor bottle (the bottle being equivalent to an individual thing), for example, of each TO 242.

The present embodiment employs a token (e.g., ERC-3525) called a semi-fungible token (SFT) as the TT (things token) 100. As mentioned above, SFT can facilitate division and integration of tokens. For that reason, even in a case in which there is a large quantity of liquor of the same type, for example, respective bottles can be easily managed by division. Moreover, in a case in which a large number of liquor bottles are collected in a container, liquor bottles per container can be expressed by one token collectively (integrally), which enables distribution management to be carried out more smoothly. As a result, a transaction of things can be carried out more smoothly than in the conventional system.

### 3. Things Token 100 and Things DAO 220

Hereinafter, a relationship between the things token 100 and the things DAO 220 will be described in more detail.
(1) The TT (things token) 100 is a thing as an individual article and at the same time is a token that behaves like a kind of securities, in which various rights relationships about the thing can be written. This point is a characteristic respect of the present embodiment, and a token (e.g., ERC-3525) called the semi-fungible token (SFT), for example, can be utilized.
(2) On the other hand, in the transaction system that utilizes a blockchain, such as the PTPF 200, the device asset token (DAT) has conventionally been handled as a thing that generates data, such as IoT, i.e., a sensor device. That is, DAT functions as a token for being handled as an IoT device.
(3) The things protocol refers to a collection of a blockchain that moves the things token 100, a blockchain that does not necessarily move the things token, tokens (such as NFTs), etc., and programs and regulations that enable value transactions and execution of contracts among various interested parties surrounding them.
(4) A things transaction currency (TCX) is a general-purpose value unit (transaction currency) by which considerations can be exchanged when various stakeholders participate with the things token 100 serving as the point of origin. TCX functions as a currency unit that provides a currency and utility shared in common in the ecosystem related to the things token 100.
(5) The architecture of the things token prescribes roles of a series of participants that can create values of the participants through the things token and TCX. The respective roles are listed below. There are seven types of players: (a) "the DO 230/the SP 232 and the AC 234/the DB 236" which are participants pertinent to IoT; (b) "the TO 242 = things owner" and "the IS 240 = issuer" which are participants pertinent to the thing (TT = things token) 100; and (c) "the B 238 (brand)" as a rule writer = platformer that unites them.
(6) The "things DAO" is a nexus of contracts among participants that defines economic rules and legal relationships among (a) tokens (TT, DAT, TCX) for which the things protocol is utilized, (b) participants (AC, DB, DO, SP, B, IS), and an external community other than them and that includes a program, and is a virtual autonomous organization (decentralized autonomous organization) (= DAO).

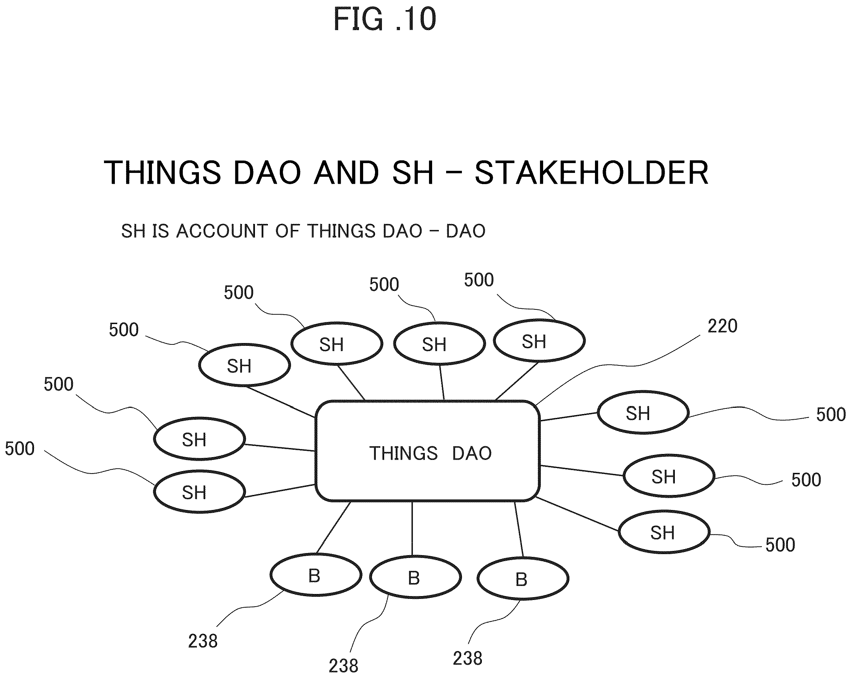

Stakeholder (SH) is an account of Things DAO 220 FIG. 10 illustrates a conceptual diagram illustrating a relationship between the things DAO 220 and stakeholders. (A person having) an account of the things DAO 220 is called a stakeholder (SH) 500. FIG. 10 illustrates the B 238, which is a kind of account of the things DAO 220, and this B 238 is also a kind of the SH 500. The SH 500 is also an interested party of the things DAO 220.

The SH 500 is an interested party of the things DAO 220, and this interested party may include various types of participants and interested parties.
(i) First, the following are participants concerning the B 238 (brand) :
   the B 238, the AC 234, the DB 236, the DO 230, the SP 232, the Bnf 402, the Dev 400, etc.
(ii) Next, the following are interested parties concerning things:
   the IS 240, the TO 242, etc.
(iii) Furthermore, in addition to the above-described two types of participants and interested parties, any participants pertinent to things other than the above-described two types, such as producers, consumers, influencers, inspectors, and developers, may be included. All of these (i), (ii), and (iii) are collectively referred to as the SH 500. A transaction contract concerning things in the present embodiment is first carried out between the things owner (TO) 242 and the stakeholder (SH) 500. Furthermore, in the present embodiment, a transaction contract can be carried out not only between the things owner (TO) 242 and the stakeholder (SH) 500, but also between the SH 500 and the SH 500, i.e., between stakeholders.

In other words, the transaction (transaction contract) concerning things in the present embodiment not only includes simply buying and selling, but also includes all of various transactions concerning the things, such as delivery, import/export, inspection, exploitation, advertisement, display, and promotion of the things.

### 4. Implementation Example of Transaction System (Token Economics) according to the Present Embodiment

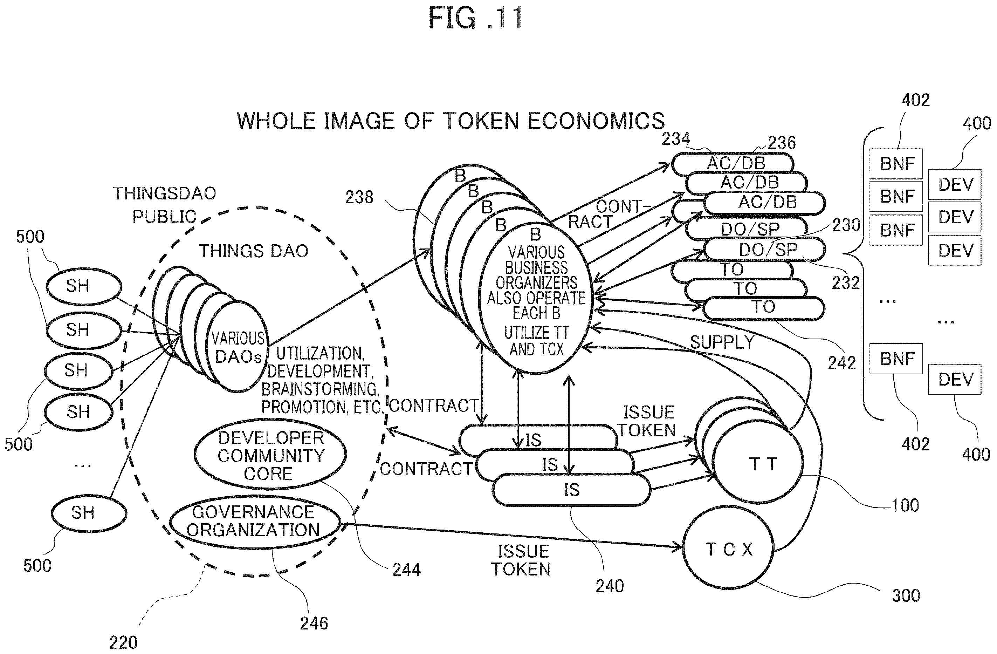

FIG. 11 illustrates an implementation example of the transaction system according to the present embodiment. First, a plurality of types of various DAOs can be present in the things DAO 220. There may be a furniture DAO, a clothing DAO, and other various DAOs. In various DAOs, the SH 500 is present as an account (see FIG. 11) as described in FIG. 10.

In the things DAO 220, there may be a developer community 244. In addition, a governance organization 246 that manages tokens for transactions, etc. may be present. A predetermined brand (B) 238 is provided in the things DAO 220. Various business organizers such as the liquor convention, for example, correspond to this B 238. The IS 240 makes contracts with the things DAO 220 and the B 238 and carries out a transaction. As mentioned above, the IS 240 issues the things token (TT) 100 which is SFT. This enables transactions of things to be carried out smoothly. The governance organization 246 may carry out various management works and, for example, may carry out issuance of TCX 300, etc.

The B 238 can receive the TT 100 and the TCX 300 mentioned above and utilizing them, make contracts with the AC 234, the DB 236, the DO 230, the SP 232, and the TO 242 to execute transactions. The DO 230 includes one or more Devs 400 as described in FIG. 5. In addition, the SP 232 includes one or more Bnfs 402 as described in FIG. 5.

The present embodiment is characterized in that transactions of things are carried out using the things token (TT) 100 in which SFT is utilized. As a result, a large number of things of the same type can be handled smoothly, and actual retail shops, etc., can easily utilize the transaction system in which a blockchain is utilized. Thus, a potential of transactions can be improved dramatically.

The embodiment of the present invention has been described above, but the present invention is not limited to the aforementioned embodiment. Moreover, the effects described in the present embodiment are mere enumeration of most suitable effects produced by the present invention, and the effects of the present invention are not limited to those described in the present embodiment.

### EXPLANATION OF REFERENCE NUMERALS

- 10: (things) token
- 12, 120: security information
- 14: user
- 100: things token (TT)
- 130: FT
- 132: NFT
- 134: smart contract
- 140: value (money amount)
- 142: owner (account)
- 144: content (text/non-text)
- 146: condition
- 200: PTPF
- 200a: protocol of PTPF
- 202: blockchain
- 204: DEXPF
- 206: platform blockchain
- 208: DT
- 210: MDT
- 220: things DAO
- 230: DO
- 232: SP
- 234: AC
- 236: DB
- 238: B
- 240: IS
- 242: TO
- 244: developer community
- 246: governance organization
- 300: TCX
- 400: Dev (device)
- 402: Bnf (beneficiary)
- 500: SH
- W: configuration required for IoT data transmission
- Z: novel configuration for utilizing things token 100
- X: brand interface
- Y: things interface

## Claims

1. A transaction system comprising:
a data transactor that maintains and manages a transaction contract for a thing utilizing a blockchain and executes the transaction contract for the thing;
an account of a things owner that owns the thing;
an issuer account that issues a things token to the thing owned by the things owner; and
one or two or more stakeholder accounts that carry out a transaction of the thing, wherein
the data transactor executes the transaction contract between the one or two or more stakeholder accounts using the things token for carrying out the transaction of the thing, and the things token is a semi-fungible token.

2. The transaction system according to claim 1, wherein the things token is a token having security fungibility and non-fungibility as a thing.

3. The transaction system according to claim 2, wherein the things token is a token having an account of the thing, a device token, a device asset token, and security information.

4. The transaction system according to claim 1, wherein
the data transactor includes a brand account that carries out a transaction of a thing of a predetermined type, and
the brand account and the issuer account make a contract, and based on the contract, the issuer account supplies the brand account with the things token having been issued.

5. The transaction system according to claim 4, wherein the brand account includes one or more brand accounts,
the transaction system further comprising a brand DAO which is a rule interface that defines a rule between the one or more brand accounts and another account, wherein
the brand makes the contract with the issuer account in accordance with the rule defined by the brand DAO.
